# EUROPEAN PATENT SPECIFICATION

(11) **EP 3 174 923 B1**
(45) Date of publication and mention of the grant of the patent: **04.07.2018**
(21) Application number: 15767280.9
(22) Date of filing: 31.07.2015
(51) Int. Cl.: C08K 3/04, C08K 3/06, C08K 5/5415

(54) **RUBBER MIXTURE COMPRISING PYROLYSIS CARBON BLACK, A METHOD TO PREPARE THE MIXURE AND USE OF SAID MIXTURE**
KAUTSCHUKMISCHUNG MIT PYROLYSERUSS, VERFAHREN ZUR HERSTELLUNG DER MISCHUNG SOWIE VERWENDUNG DIESER MISCHUNG
MÉLANGE DE CAOUTCHOUC COMPRENANT DU NOIR DE CARBONE DE PYROLYSE, PROCÉDÉ DE PRÉPARATION DU MÉLANGE ET UTILISATION DUDIT MÉLANGE

(30) Priority: 01.08.2014 IT RM20140445
(43) Date of publication of application: 07.06.2017
(73) Proprietor: Bridgestone Corporation, Tokyo 104-8340 (JP)
(72) Inventor: DI RONZA, Raffaele, I-00146 Roma (IT); CALZETTA, Alessandra, I-00128 Roma (IT)
(74) Representative: Marchetti, Alessio
(86) International application number: PCT/IB2015/055836
(87) International publication number: WO 2016/016869

(56) References cited:
- EP-A1- 2 267 069
- WO-A1-98/47971
- US-A- 5 919 855

## Description

### TECHNICAL FIELD

The present invention relates to a method to prepare rubber mixtures comprising pyrolysis carbon black.

### BACKGROUND ART

For ecological reasons the need for proper disposal and recycling of end-of-life tyres has been long felt. In this respect, attempts have been made to be able to develop procedures that would allow the recycling of at least some components thereof. One of the end-of-life tyre components that is desirable to be recuperated for subsequent re-use thereof is carbon black, which is considered a high-end material.

The recycling of carbon black takes place by means of a pyrolysis process of the end-of-life tyre carcass. Here and in the following "pyrolysis carbon black" refers to a carbon black obtained from an end-of-life tyre by means of the pyrolysis process. Differently, here and in the following "first use carbon black" means a non recycled carbon black.

Despite the pyrolysis carbon black has application in various fields, however it has been found that it has, for the same surface area, a lower reinforcing power than that of the first use carbon black. The lower reinforcing power of the pyrolysis carbon black is attributable to the high content of ash from the pyrolysis process itself.

In the preparation of rubber mixtures for tyres such a disadvantage constitutes an obstacle to the possibility to replace part of the first use carbon black with pyrolysis carbon black. In fact, it has been experimentally proven that even partial replacement of first use carbon black with the pyrolysis carbon black causes a noticeable deterioration of the mechanical properties of the rubber mixture such as abrasion resistance, ultimate elongation, resistance to tensile stress, the M% modulus values etc.

As can be immediately understood, the possibility of a use of the pyrolysis carbon black in the preparation of mixtures for tyres would be a great advantage in ecological terms.

The Applicant has obtained a solution thanks to which it is possible to prepare rubber mixtures for tyres wherein a part of the first use carbon black is replaced with the pyrolysis carbon black without thereby leading to a deterioration of the mechanical properties of the mixture itself.

### DISCLOSURE OF INVENTION

Object of the present invention is a rubber mixture comprising a polymer base with a cross-linkable unsaturated chain, a reinforcing filler, a silane bonding agent, sulphur and vulcanizing agents; said mixture being characterized in that a part of said reinforcing filler consists of pyrolysis carbon black whose surface is at least partially coated with a silica layer.

Preferably, the silica layer coats at least 50% of the surface of the pyrolysis carbon black; more preferably at least 80%.

Preferably, said reinforcing filler consists of carbon black; said pyrolysis carbon black being in an amount ≤50% in phr of the quantity in phr of total carbon black.

Preferably, the silane bonding agent is provided in the mixture in a quantity ranging from 5 to 15% in phr of the quantity in phr of said pyrolysis carbon black.

Preferably, said silica layer is obtained by causing the pyrolysis carbon black to undergo a sol-gel process.

Another object of the present invention is related to a portion of the tyre manufactured with a mixture of the present invention.

Still another object of the present invention is a tyre comprising at least one portion manufactured with a mixture of the present invention.

Still another object of the present invention is related to the use of pyrolysis carbon black in rubber mixtures whose outer surface is at least partially coated with a silica layer.

### BEST MODE FOR CARRYING OUT THE INVENTION

The following examples are intended for illustrative and nonlimiting purposes and for a better understanding of the invention.

### EXAMPLES

Five comparative mixtures (A-E) and a mixture (F) according to the method of the present invention were prepared.

The comparative rubber mixture A does not comprise the pyrolysis carbon black but only first use carbon black; the comparative rubber B differs from the mixture A only for the presence of the silane bonding agent; the comparative rubber mixture C comprises pyrolysis carbon black without the coating silica layer and does not comprise the silane bonding agent; the comparative rubber mixture D is different from the comparative rubber mixture C only for the presence of the silane bonding agent; the comparative rubber mixture E comprises pyrolysis carbon black with the silica layer coating but does not comprise the silane bonding agent; finally, the mixture F of the invention comprises both the pyrolysis carbon black with the coating silica layer and the silane bonding agent.

All the mixtures of the examples comprise the same amount in phr of total carbon black (first use carbon black + pyrolysis carbon black).

The mixtures of the examples have been obtained according to the procedure disclosed below:

### - Preparation of the mixtures -

### (First mixing step)

In a mixer with tangential rotors and having an inner volume comprised between 230 and 270 liters the cross-linkable polymer base, first use carbon black, the pyrolysis carbon black (both with the silica coating and without the silica coating), when provided, and the silane bonding agent, when provided, reaching a filling factor of between 66-72% have been loaded before the start of mixing.

The mixer was operated at a speed comprised between 40-60 revolutions/minute, and the mixture formed was discharged once a temperature comprised between 140-160 °C was reached.

### (Second mixing step)

The mixture obtained from the previous step was again machined in mixer operated at a speed comprised between 40-60 revolutions/minute, and thereafter discharged once a temperature of between 130-150° C was reached.

### (Final mixing step)

To the mixture obtained from the previous step sulphur, vulcanizing agents and antioxidants thus reaching a fill factor of between 63-67% were added.

The mixer was operated at a speed comprised between 20-40 revolutions/minute, and the mixture formed was discharged once a temperature comprised between 100-110 °C was reached.

Table I shows the compositions in phr of the six mixtures.

**TABLE I**

| | A | B | C | D | E | F |
|---|---|---|---|---|---|---|
| Polymeric base | 100.0 | 100.0 | 100.0 | 100.0 | 100.0 | 100.0 |
| First use carbon black | 58.0 | 58.0 | 38.0 | 38.0 | 38.0 | 38.0 |
| Silane bonding agent | -- | 2.0 | -- | 2.0 | -- | 2.0 |
| Pyrolysis carbon black * | -- | -- | 20.0 | 20.0 | -- | -- |
| Pyrolysis carbon black** | -- | -- | -- | -- | 20.0 | 20.0 |
| Sulphur | 1.4 | 1.4 | 1.4 | 1.4 | 1.4 | 1.4 |
| Vulcanizing agents | 10.0 | 10.0 | 10.0 | 10.0 | 10.0 | 10.0 |
| Antioxidant | 5.1 | 5.1 | 5.1 | 5.1 | 5.1 | 5.1 |

The polymeric base used is a mixture of natural rubber and synthetic rubber (BR and SBR)

The first use carbon black is of the type N347

The silane bonding agent used is Si75.

By the term "vulcanizing agents" it is intended to mean those mixtures, such as vulcanization accelerators, which together with the sulphur cause the crosslinking of the polymeric base. In the above examples vulcanizing agents consist of MBTS and DPG.

The antioxidant used is 6PPD.

Pyrolysis carbon black* is carbon black obtained by the pyrolysis process of end-of-life tyres, devoid of the coating silica layer, having a surface area in the range of 50-75 m²/g.

Pyrolysis carbon black** is equal to Pyrolysis carbon black with the difference of being coated with a silica layer obtained by a sol-gel process.

In the following being disclosed by way of example is the procedure used for obtaining the Pyrolysis Carbon Black**.

An aqueous solution (1400ml) of EtOH (Ethanol) at 90% v/v was prepared to which were added 33,7mL of 30% v/v NH₃. The solution was left stirring at 200 rpm. While the aqueous solution was being stirred at 200rpm, 15 grams of pyrolysis carbon black and 67,5mL of TEOS (tetrahydroxysilane) were added. At this point, the solution was left stirring at 200rpm for 24h at room temperature to then be filtered. The filtrate was subsequently washed with 300mL of EtOH and centrifuged for 10 minutes at 3000rpm. The precipitate was left to dry for at least one night and recovered.

From the above mixtures respective samples have been derived which were subjected to tests with regard to their mechanical properties, in order to verify the advantages obtained from the use of the pyrolysis carbon black coated with the silica layer used in combination with a silane bonding agent.

In particular the properties related to resistance to tensile stress, ultimate elongation, Modulus at 300% and resistance to crack propagation were evaluated.

The mechanical properties were measured in accordance with ASTM D412C.

The results obtained from the above tests are reported in Table II in indexed form to the results obtained with the mixture A.

**TABLE II**

| | A | B | C | D | E | F |
|---|---|---|---|---|---|---|
| Tensile strength | 100 | 100 | 80 | 80 | 85 | 100 |
| Ultimate elongation | 100 | 100 | 90 | 90 | 90 | 100 |
| Module at 300% | 100 | 100 | 70 | 70 | 80 | 100 |
| Resistance to crack propagation | 100 | 100 | 80 | 80 | 85 | 100 |

From the results reported in Table II is clearly shown that the use of pyrolysis carbon black is only possible if the latter is coated with a silica layer and if in combination with a silane bonding agent. Indeed, the results relating to the comparison mixtures C and D show that the pyrolysis carbon black without the coating of the silica layer involves a clear deterioration of the mechanical characteristics; the results of the mixtures B and D show that the mere presence of the silane bonding agent in itself brings no improvement in the mechanical properties; while the results relating to the mixture E show that the presence of the pyrolysis carbon black even if coated with a silica layer but without the silane bonding agent does not allow to recover the deterioration resulting from partial replacement of first use carbon black with the pyrolysis carbon black.

Otherwise, the results relating to the mixture F demonstrate how the combined use of the silane bonding agent with the pyrolysis carbon black coated silica layer enables to impart the rubber mixture values of mechanical properties comparable to those obtained by using only the first use carbon black. In this way the possibility of using the pyrolysis carbon black is ensured, without this compromising the mechanical characteristics of the rubber mixture.

As is immediately understood, the possibility offered by the present invention involves a major advantage in ecologic terms. In fact, thanks to the present invention it will be possible to use the carbon black obtained from end-of-life tyres to prepare new tyres.

Finally, despite the process for obtaining the coating necessarily involves an additional expense, however, the possibility of using the recycled carbon black, even if properly treated, in replacement of a part of the first use carbon black still represents an economic advantage.

## Claims

1. A rubber mixture comprising a polymer base with a cross-linkable unsaturated chain, a reinforcing filler, a silane bonding agent, sulphur and vulcanizing agents; said mixture being **characterized in that** a part of said reinforcing filler consists of pyrolysis carbon black, whose surface is at least partially coated with a silica layer.

2. The rubber mixture according to claim 1, **characterized in that** the silica layer coats at least 50% of the surface of the pyrolysis carbon black.

3. The rubber mixture according to claim 1, **characterized in that** the silica layer coats at least 80% of the surface of the pyrolysis carbon black.

4. The rubber mixture according to one of the preceding claims, **characterized in that** said reinforcing filler consists of carbon black; said pyrolysis carbon black whose surface is at least partially coated with a silica layer being in a quantity ≤50% in phr of the quantity in phr of total carbon black.

5. The rubber mixture according to one of the preceding claims, **characterized in that** the silane bonding agent is provided in the mixture in a quantity ranging from 5 to 15% in phr of the quantity in phr of said pyrolysis carbon black whose surface is at least partially coated with a silica layer.

6. The rubber mixture according to one of the preceding claims, **characterized in that** said silica layer is obtained by causing a pyrolysis carbon black to undergo a sol-gel process.

7. A tyre portion manufactured with a mixture according to one of the preceding claims.

8. A tyre comprising at least one portion according to claim 7.

9. A use in rubber mixtures of pyrolysis carbon black having an outer surface at least partially coated with a silica layer.

10. The use according to claim 9, **characterized in that** the silica layer coats at least 50% of the surface of the pyrolysis carbon black.

11. The use according to claim 9, **characterized in that** the silica layer coats at least 80% of the surface of the pyrolysis carbon black.

## Patentansprüche

1. Gummimischung, umfassend eine Polymerbasis mit einer vernetzbaren ungesättigten Kette, einem verstärkenden Füllstoff, einem Silanhaftungsbindemittel, Schwefel und Vulkanisierungsmitteln; wobei die Mischung **dadurch gekennzeichnet ist, dass** ein Teil des verstärkenden Füllstoffs aus Pyrolyseruß besteht, dessen Oberfläche mindestens teilweise mit einer Kieselerdeschicht beschichtet ist.

2. Gummimischung nach Anspruch 1, **dadurch gekennzeichnet, dass** die Kieselerdeschicht mindestens 50 % der Oberfläche des Pyrolyserußes beschichtet.

3. Gummimischung nach Anspruch 1, **dadurch gekennzeichnet, dass** die Kieselerdeschicht mindestens 80 % der Oberfläche des Pyrolyserußes beschichtet.

4. Gummimischung nach einem der vorstehenden Ansprüche, **dadurch gekennzeichnet, dass** der verstärkende Füllstoff aus Ruß besteht; wobei der Pyrolyseruß, dessen Oberfläche mindestens teilweise mit einer Kieselerdeschicht beschichtet ist, in einer Menge ≤ 50 % in phr der Menge des Gesamtrußes in phr vorliegt.

5. Gummimischung nach einem der vorstehenden Ansprüche, **dadurch gekennzeichnet, dass** das Silanhaftungsbindemittel in der Mischung in einer Menge im Bereich von 5 bis 15 % in phr der Menge in phr des Pyrolyserußes bereitgestellt wird, dessen Oberfläche mindestens teilweise mit einer Kieselerdeschicht beschichtet ist.

6. Gummimischung nach einem der vorstehenden Ansprüche, **dadurch gekennzeichnet, dass** die Kieselerdeschicht erhalten wird, indem ein Pyrolyseruß veranlasst wird, einen Sol-Gel-Prozess zu unterlaufen.

7. Reifenabschnitt, gefertigt mit einer Mischung nach einem der vorstehenden Ansprüche.

8. Reifen, umfassend mindestens einen Abschnitt nach Anspruch 7.

9. Verwendung von Gummimischungen von Pyrolyseruß mit einer mindestens teilweise mit einer Kieselerdeschicht beschichteten Außenoberfläche.

10. Verwendung nach Anspruch 9, **dadurch gekennzeichnet, dass** die Kieselerdeschicht mindestens 50 % der Oberfläche des Pyrolyserußes beschichtet.

11. Verwendung nach Anspruch 9, **dadurch gekennzeichnet, dass** die Kieselerdeschicht mindestens 80 % der Oberfläche des Pyrolyserußes beschichtet.

## Revendications

1. Mélange de caoutchouc comprenant une base polymère avec une chaîne insaturée réticulable, une charge renforçante, un agent de liaison silane, du soufre et des agents de vulcanisation ; ledit mélange étant **caractérisé en ce qu'**une partie de ladite charge renforçante est constituée de noir de carbone de pyrolyse, dont la surface est au moins partiellement revêtue d'une couche de silice.

2. Mélange de caoutchouc selon la revendication 1, **caractérisé en ce que** la couche de silice revêt au moins 50 % de la surface du noir de carbone de pyrolyse.

3. Mélange de caoutchouc selon la revendication 1, **caractérisé en ce que** la couche de silice revêt au moins 80 % de la surface du noir de carbone de pyrolyse.

4. Mélange de caoutchouc selon l'une des revendications précédentes, **caractérisé en ce que** ladite charge renforçante est constituée de noir de carbone ; ledit noir de carbone de pyrolyse dont la surface est au moins partiellement revêtue d'une couche de silice étant en une quantité ≤50 % en pcc de la quantité en pcc du noir de carbone total.

5. Mélange de caoutchouc selon l'une des revendications précédentes, **caractérisé en ce que** l'agent de liaison silane est fourni dans le mélange en une quantité allant de 5 à 15 % en pcc de la quantité en pcc dudit noir de carbone de pyrolyse dont la surface est au moins partiellement revêtue d'une couche de silice.

6. Mélange de caoutchouc selon l'une des revendications précédentes, **caractérisé en ce que** ladite couche de silice est obtenue en amenant un noir de carbone de pyrolyse à subir un processus sol-gel.

7. Partie de pneumatique fabriquée avec un mélange selon l'une des revendications précédentes.

8. Pneumatique comprenant au moins une partie selon la revendication 7.

9. Utilisation dans des mélanges de caoutchouc de noir de carbone de pyrolyse ayant une surface externe au moins partiellement revêtue d'une couche de silice.

10. Utilisation selon la revendication 9, **caractérisée en ce que** la couche de silice revêt au moins 50 % de la surface du noir de carbone de pyrolyse.

11. Utilisation selon la revendication 9, **caractérisée en ce que** la couche de silice revêt au moins 80 % de la surface du noir de carbone de pyrolyse.
